# EUROPEAN PATENT SPECIFICATION

(11) **EP 3 616 816 B1**
(45) Date of publication and mention of the grant of the patent: **05.01.2022**
(21) Application number: 19191164.3
(22) Date of filing: 12.08.2019
(51) Int. Cl.: B23D 61/02, B28D 1/04

(54) **HOLE SAW AND DEVICE FOR CUTTING HOLE**
LOCHSÄGE UND VORRICHTUNG ZUM SCHNEIDEN VON LÖCHERN
SCIE-CLOCHE ET DISPOSITIF DE DÉCOUPE DE TROU

(30) Priority: 31.08.2018 CN 201811010168
(43) Date of publication of application: 04.03.2020
(73) Proprietor: Bosch Power Tools (China) Co., Ltd., Zhejiang 310052 (CN)
(72) Inventor: Jia, Baoshuai, Hangzhou City, Zhe Jiang Province (CN)
(74) Representative: Isarpatent

(56) References cited:
- EP-A1- 3 287 220
- WO-A2-2005/096949
- CN-Y- 201 380 335
- JP-A- 2007 290 112
- US-A1- 2018 056 405

## Description

### Technical field

The present application relates to a hole saw, and to a device with such a hole saw attached thereto.

### Background art

EP 3 287 220 A1 discloses a hole saw according to the preamble of claim 1, in particular a hole saw of the type Z having an axis, cylindrical body; and multiple cutting teeth disposed at a circumferential edge of the body, the multiple cutting teeth comprising inner sub-teeth offset towards the axis, outer sub-teeth offset away from the axis, and straight teeth which are not offset.

A hole saw, also called a hole cutter, is a cutting tool commonly used in modern industry or engineering for making round holes. A hole saw is generally mounted on a portable electric tool, and is widely used on account of its advantages such as simple and flexible operation and convenience of carrying.

A hole saw is used for making round holes in materials such as wood, plastic, metal and glass fibre. An existing hole saw generally comprises a cylindrical body, and cutting teeth distributed uniformly at a circumferential edge at one end of the body. An existing hole saw has the problem of serious burning of cutting teeth in the process of cutting a hole in a material such as wood, and has the problem of serious wear of cutting teeth when cutting a hole in a material such as metal, and has a limited lifespan as a result; an existing hole saw also has other problems such as difficulty of expelling swarf.

Thus, it is necessary to improve a hole saw for an electric tool, in order to overcome the defects in the prior art.

### Content of the invention

The aim of the present application is to provide an improved hole saw and a hole-cutting device with such a hole saw attached thereto. In the process of cutting a hole in a material, the hole saw according to the present application allows swarf to be expelled easily, experiences little burning, and has a long lifespan.

The present invention provides a hole saw according to claim 1.

According to a feasible embodiment, each of the multiple cutting teeth (110) has a front cutting face, the front cutting face comprising a planar part (b) and an arched-surface part (g); for 80% or more of the multiple cutting teeth (110), the length (S) of the planar part (b) is less than or equal to 20% of the tooth depth (H) of the cutting tooth, and preferably, the length (S) of the planar part (b) is less than or equal to 15% of the tooth depth (H) of the cutting tooth.

In another aspect thereof, the present application provides a device for cutting a hole, comprising:
a rotation shaft capable of rotating; and
a hole saw as described above, the hole saw being coupled to the rotation shaft, and performing hole-cutting under a rotary driving action of the rotation shaft.

According to a feasible embodiment, the device is either an electric tool or a table saw, wherein the electric tool comprises a hand-held electric drill and an impact drill.

According to the present application, the hole saw is attached to the device for cutting a hole; the hole saw itself has an improved cutting tooth configuration, a wider range of suitability, a long lifespan and high operating efficiency, hence the hole-cutting device with such a hole saw attached thereto has high operating efficiency, and offers a good user experience.

### Description of the accompanying drawings

A more thorough understanding of and familiarity with the above-mentioned and other aspects of the present application will be gained below, based on particular embodiments with reference to the accompanying drawings, in which:
Fig. 1 is a three-dimensional schematic view of a hole saw according to a feasible embodiment of the present application.
Fig. 2 is a schematic side view of a hole saw according to a feasible embodiment of the present application.
Fig. 3 is a schematic side view of an opened-out peripheral wall of a hole saw according to a feasible embodiment of the present application.
Fig. 4 is a top view of a hole saw according to a feasible embodiment of the present application in an opened-out state.
Fig. 5 is a planar schematic diagram of two cutting teeth according to a feasible embodiment of the present application.
Fig. 6 is a planar schematic diagram of two adjacent cutting teeth according to a feasible embodiment of the present application.
Fig. 7 is a planar schematic diagram of three adjacent cutting teeth according to a feasible embodiment of the present application.

### Particular embodiments

The present application generally relates to a device for cutting a hole, the device having a hole saw coupled thereto; the hole-cutting device is in particular a portable electric tool or bench drill, the portable electric tool comprising an electric drill and an impact drill, etc.

Some embodiments of the present application are now described with reference to the accompanying drawings.

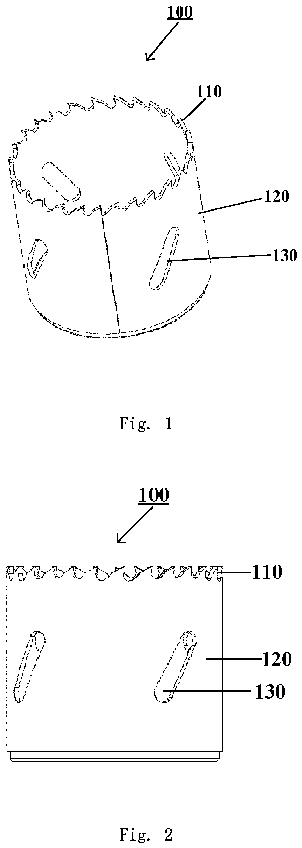

Figs. 1 - 3 show schematically a hole saw 100 according to a particular embodiment of the present application, the hole saw having an axis A. The hole saw 100 comprises a cylindrical body 120, and cutting teeth 110 disposed at a circumferential edge at one end of the body 120.

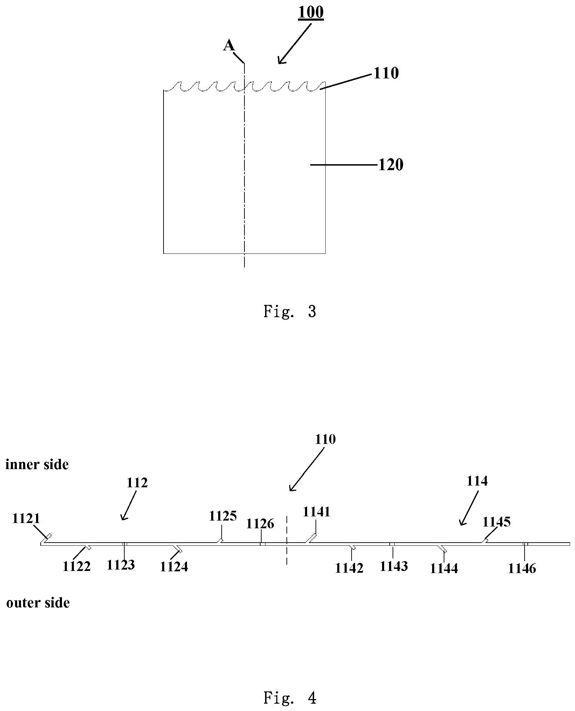

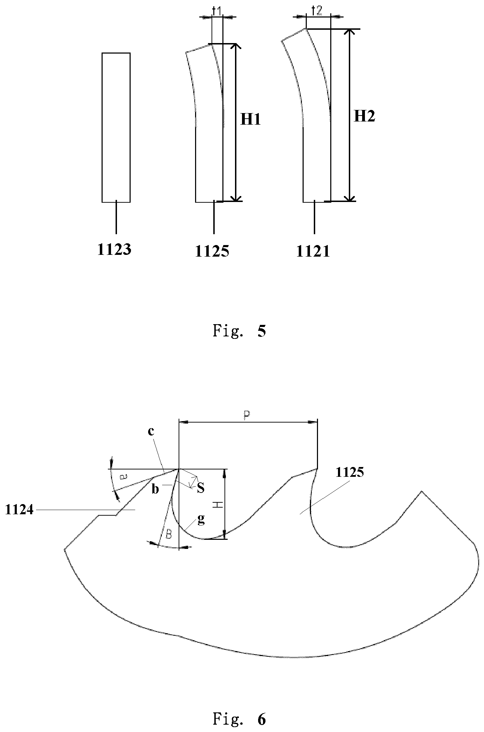

Fig. 4 shows a top view of the hole saw 100 shown in fig. 1 in an opened-out state. Fig. 6 is a planar schematic diagram of two adjacent cutting teeth 1124, 1126 according to a feasible embodiment of the present application. Referring to figs. 4 and 6, the hole saw 100 comprises multiple cutting teeth 110. These cutting teeth 110 include inner sub-teeth 1121, 1125 offset towards the axis A (cutting teeth at the "inner side" shown in fig. 4), outer sub-teeth 1122, 1124 offset away from the axis A (cutting teeth at the "outer side" shown in fig. 4), and straight teeth 1123, 1126 which are not offset. For 80% or more of the multiple cutting teeth (110) (e.g. cutting tooth 1124), the ratio of the tooth depth H of the cutting tooth 1124 to the pitch P of the cutting tooth 1124 and the preceding cutting tooth 1125 thereof is in the range of 30% - 60%. In some embodiments, for 80% or more of the multiple cutting teeth 110 (e.g. cutting tooth 1124), the ratio of the tooth depth H of the cutting tooth 1124 to the pitch P of the cutting tooth 1124 and the preceding cutting tooth 1125 thereof is preferably in the range of 35% - 50%. In some embodiments, for each of the multiple cutting teeth 110 (e.g. cutting tooth 1124), the ratio of the tooth depth H of the cutting tooth 1124 to the pitch P of the cutting tooth 1124 and the preceding cutting tooth 1125 thereof is in the range of 30% - 60%, and preferably, the ratio of the tooth depth H of the cutting tooth 1124 to the pitch P of the cutting tooth 1124 and the preceding cutting tooth 1125 thereof is preferably in the range of 35% - 50%.

In the present application, the tooth depth of a cutting tooth is the depth or height of the cutting tooth in a vertical direction. In other words, the tooth height and the tooth depth of the cutting tooth refer to the same value. The distance between two adjacent cutting teeth is defined as the pitch P. Specifically, the distance between the foremost end of a shoulder c of any cutting tooth (e.g. cutting tooth 1124) and the foremost end of a shoulder of the preceding cutting tooth 1125 immediately adjacent thereto is defined as the pitch P.

Continuing to refer to fig. 6, each of the multiple cutting teeth 110 (e.g. cutting tooth 1124) has a front cutting face and a shoulder c. The front cutting face comprises a planar part b and an arched-surface part g, wherein the planar part b has a length S. Each of the multiple cutting teeth 110 (e.g. cutting tooth 1124) has a front angle α and a rear angle β. The front angle α is defined as the included angle between the planar part of the front cutting face of the cutting tooth and a vertical plane. The rear angle β is defined as the included angle between a shoulder surface of the cutting tooth and a horizontal plane.

It should be noted that the preceding cutting tooth herein is the cutting tooth located in front relative to the cutting tooth in a rotary cutting direction of the hole saw. It should be noted that the length S of the planar part b herein is the length of the planar part itself, i.e. the length S is the length of the planar part b in the direction of the front angle α thereof, not the vertical length of the planar part b in the vertical direction.

In some embodiments, the length S of the planar part b of any one of the multiple cutting teeth 110 (e.g. cutting tooth 1124) is less than or equal to 20% of the tooth depth H thereof. Furthermore, preferably, the length S of the planar part b of any cutting tooth is less than or equal to 15% of the tooth depth H thereof. In some embodiments, the length S of the planar part of the cutting tooth is less than 1 mm.

Thus, the front cutting face of the cutting tooth 110 of the hole saw 100 has less of the planar part, and relative to this, the front cutting face of the cutting tooth 110 has more of the arched-surface part. With such a configuration, i.e. with the arched-surface part accounting for a larger proportion of the front cutting face, resistance during hole-cutting is reduced, and the expelling of swarf is facilitated, because an arched surface facilitates the expelling of swarf during hole-cutting to a greater extent than a straight surface, and has low resistance.

In some embodiments, for any one of the multiple cutting teeth 110 (e.g. cutting tooth 1124), the front angle α of the cutting tooth is in the range of 3° - 10°, and the rear angle β of the cutting tooth is in the range of 30° - 50°. Such a cutting tooth structure does not easily deform during hole-cutting.

In the present application, the radial distance by which the inner sub-teeth or the outer sub-teeth are offset from vertical positions thereof is called the sub-tooth amount. Here, the sub-tooth amount is expressed using an absolute value of a value of an offset distance. Fig. 5 shows as an example sub-tooth amounts of two types of cutting teeth (i.e. the straight tooth 1123 and inner sub-teeth 1125, 1121). As shown in fig. 5, the sub-tooth amount of the straight tooth 1123 is 0, the sub-tooth amount of the inner sub-tooth 1125 is t1, and the sub-tooth amount of the inner sub-tooth 1121 is t2. According to an embodiment of the present application, a cutting tooth with a larger sub-tooth amount also has a larger tooth height (tooth depth) in the vertical direction. For example, the sub-tooth amount t2 of the inner sub-tooth 1121 is greater than the sub-tooth amount t1 of the inner sub-tooth 1125, so the tooth height H2 of the inner sub-tooth 1121 is greater than the tooth height HI of the inner sub-tooth 1125. It should be understood that although inner sub-teeth are taken as an example in fig. 5, the same is true for the sub-tooth amounts and tooth heights of the outer sub-teeth.

In some embodiments, among the multiple cutting teeth 110, the sub-tooth amounts of any two adjacent outer sub-teeth are different, and the tooth height of the outer sub-tooth with the larger sub-tooth amount is higher than the tooth height of the outer sub-tooth with the smaller sub-tooth amount. The sub-tooth amounts of any two adjacent inner sub-teeth are different, and the tooth height of the inner sub-tooth with the larger sub-tooth amount is higher than the tooth height of the inner sub-tooth with the smaller sub-tooth amount.

Thus, in the process of the hole saw 100 rotating on a material in order to cut a hole in the material, a round groove is cut in the material; the outer sub-teeth are responsible for cutting an outer circuit of the round groove, the inner sub-teeth are responsible for cutting an inner circuit of the round groove, and the straight teeth are responsible for cutting a middle circuit of the round groove. In this way, the expelling of swarf is facilitated during hole-cutting.

Furthermore, since the tooth height of a cutting tooth with a large sub-tooth amount is greater than the tooth height of a cutting tooth with a small sub-tooth amount, when the hole saw 100 is in the process of cutting a hole rotationally, in the case of an outer cutting circuit, the tooth heights of the outer sub-teeth are arranged such that large tooth heights alternate with small tooth heights at intervals, and in the case of an inner cutting circuit, the tooth heights of the inner sub-teeth are also arranged such that large tooth heights alternate with small tooth heights at intervals; the cutting teeth with the large tooth heights wear first, and when the tooth heights of the cutting teeth with the large tooth heights (i.e. large sub-tooth amounts) wear to the same tooth height as the cutting teeth with the small tooth heights (i.e. small sub-tooth amounts), all of the cutting teeth together perform the work of cutting the hole. Thus, especially when cutting a hole in a material such as metal, the cutting teeth will experience serious wear, and in the case where the cutting teeth with larger tooth heights wear first and then all of the cutting teeth work together, the hole saw has a longer lifespan.

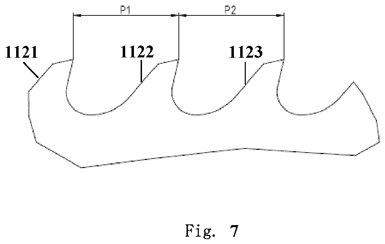

Fig. 7 is a planar schematic diagram of three adjacent cutting teeth 1121, 1122, 1123 according to a feasible embodiment of the present application. According to an embodiment of the present application, among any three adjacent cutting teeth among the multiple cutting teeth 110, the difference between the sub-tooth amounts of any two connected cutting teeth is in the range of 0.15 mm - 0.3 mm.

Continuing to refer to fig. 7, among any three adjacent consecutive cutting teeth among the multiple cutting teeth 110, there is a first pitch PI between a first cutting tooth 1121 and a second cutting tooth 1122, and there is a second pitch P2 between the second cutting tooth 1122 and a third cutting tooth 1123. When the first pitch PI is greater than the second pitch P2, the sub-tooth amount of the first cutting tooth 1121 is smaller than the sub-tooth amount of the second cutting tooth 1122. When the first pitch PI is smaller than the second pitch P2, the sub-tooth amount of the first cutting tooth 1121 is greater than the sub-tooth amount of the second cutting tooth 1122. With such an arrangement of cutting teeth, the cutting teeth do not easily deform during hole-cutting.

Referring to fig. 4, according to the invention multiple cutting teeth 110 comprise two or more sets of cutting teeth. For example, multiple sets of cutting teeth are configured in a repeating arrangement in the rotary cutting direction of the hole saw 100, wherein each set of cutting teeth comprises multiple cutting teeth. It should be understood that although only two sets of cutting teeth are shown in fig. 4, the hole saw 100 may have any number of sets, greater than two, of cutting teeth. Of course, depending on the diameter of the body 120 of the hole saw 100, the multiple cutting teeth 110 will experience scenarios in which the final set of cutting teeth is incomplete or the final cutting tooth is incomplete.

According to the invention, each of the multiple sets of cutting teeth (e.g. a cutting tooth set 112) comprises: a first inner sub-tooth 1121 and a second inner sub-tooth 1125 offset towards the axis A; a first outer sub-tooth 1122 and a second outer sub-tooth 1124 offset away from the axis A; and a first straight tooth 1123 and a second straight tooth 1126 which are not offset. The first inner sub-tooth 1121 and the second inner sub-tooth 1125 have different sub-tooth amounts; the first outer sub-tooth 1122 and the second outer sub-tooth 1124 also have different sub-tooth amounts. For example, the first inner sub-tooth 1121 and the second outer sub-tooth 1124 have a larger first sub-tooth amount, while the second inner sub-tooth 1125 and the first outer sub-tooth 1122 have a smaller second sub-tooth amount. In some embodiments, all of the inner sub-teeth and the outer sub-teeth have a sub-tooth amount less than 1 mm; preferably, all of the inner sub-teeth and the outer sub-teeth have a sub-tooth amount in the range of 0.4 mm - 0.7 mm.

According to the invention, each set of cutting teeth 112 comprises, in the rotary cutting direction: the first inner sub-tooth 1121 with the first sub-tooth amount, the first outer sub-tooth 1122 with the second sub-tooth amount, the first straight tooth 1123, the second outer sub-tooth 1124 with the first sub-tooth amount, the second inner sub-tooth 1125 with the second sub-tooth amount, and the second straight tooth 1126, the first sub-tooth amount being greater than the second sub-tooth amount.

In some embodiments, among three adjacent cutting teeth, namely the first inner sub-tooth 1121, the first outer sub-tooth 1122 and the first straight tooth 1123, the difference in sub-tooth amounts between any two cutting teeth is in the range of 0.15 mm - 0.3 mm. Among three adjacent cutting teeth, namely the second outer sub-tooth 1124, the second inner sub-tooth 1125 and the second straight tooth 1126, the difference in sub-tooth amounts between any two cutting teeth is in the range of 0.15 mm - 0.3 mm.

According to the present invention, the hole saw imparts superior hole-cutting performance to the hole-cutting device to which it is attached. The hole saw according to the present application has an improved cutting tooth configuration, and the performance of the hole saw itself is thereby improved, increasing the hole-cutting efficiency. Moreover, the hole saw according to the present application is suitable for cutting holes in more than one type of material. In the process of cutting a hole in a material using the hole saw of the present application, the expelling of swarf is facilitated, resistance is low, and there is little burning, hence the hole saw according to the present application has the advantage of a long lifespan.

Although the present application has been described here with reference to particular embodiments, various s amendments may be made to these details within the scope of the claims.

## Claims

1. Hole saw (100), having an axis (A), the hole saw (100) comprising:
a cylindrical body (120); and
multiple cutting teeth (110) disposed at a circumferential edge of the body (120), the multiple cutting teeth (110) comprising: inner sub-teeth (1121, 1125) offset towards the axis (A), outer sub-teeth (1122, 1124) offset away from the axis (A), and straight teeth (1123, 1126) which are not offset,
wherein for 80% or more of the multiple cutting teeth (110), the ratio of the tooth depth (H) of the cutting tooth to the pitch (P) of the cutting tooth and the preceding cutting tooth thereof is in the range of 30% - 60%, wherein the multiple cutting teeth (110) comprise two or more sets of cutting teeth (112, 114),
**characterized in that**
each set of cutting teeth (112) among the two or more sets of cutting teeth (112, 114) comprising, in a rotary cutting direction: a first inner sub-tooth (1121) with a first sub-tooth amount, a first outer sub-tooth (1122) with a second sub-tooth amount, a first straight tooth (1123), a second outer sub-tooth (1124) with a first sub-tooth amount, a second inner sub-tooth (1125) with a second sub-tooth amount, and a second straight tooth (1126), the first sub-tooth amount being greater than the second sub-tooth amount, and wherein the sub-tooth amounts correspond to the radial distances by which the inner sub-teeth or the outer sub-teeth are offset from vertical positions thereof.

2. Hole saw (100) according to Claim 1, **characterized in that** each of the multiple cutting teeth (110) has a front cutting face, the front cutting face comprising a planar part (b) and an arched-surface part (g); for 80% or more of the multiple cutting teeth (110), the length (S) of the planar part (b) is less than or equal to 20% of the tooth depth (H) of the cutting tooth, and preferably, the length (S) of the planar part (b) is less than or equal to 15% of the tooth depth (H) of the cutting tooth.

3. Hole saw (100) according to Claim 1 or 2, **characterized in that** among the multiple cutting teeth (110):
sub-tooth amounts of any two adjacent outer sub-teeth are different, and the tooth height of the outer sub-tooth with the larger sub-tooth amount is higher than the tooth height of the outer sub-tooth with the smaller sub-tooth amount;
sub-tooth amounts of any two adjacent inner sub-teeth are different, and the tooth height of the inner sub-tooth with the larger sub-tooth amount is higher than the tooth height of the inner sub-tooth with the smaller sub-tooth amount.

4. Hole saw (100) according to Claim 1, **characterized in that** in each set of cutting teeth:
the difference between sub-tooth amounts of any two cutting teeth among the first inner sub-tooth (1121), the first outer sub-tooth (1122) and the first straight tooth (1123) is in the range of 0.15 mm - 0.3 mm, and
the difference in sub-tooth amounts between any two cutting teeth among the second outer sub-tooth (1124), the second inner sub-tooth (1125) and the second straight tooth (1126) is in the range of 0.15 mm - 0.3 mm.

5. Hole saw (100) according to any one of Claims 1 - 4, **characterized in that** among any three adjacent consecutive cutting teeth among the multiple cutting teeth (110), there is a first pitch (P1) between a first cutting tooth and a second cutting tooth, and there is a second pitch (P2) between the second cutting tooth and a third cutting tooth; when the first pitch (P1) is greater than the second pitch (P2), a sub-tooth amount of the first cutting tooth is smaller than the sub-tooth amount of the second cutting tooth, and when the first pitch (P1) is smaller than the second pitch (P2), the sub-tooth amount of the first cutting tooth is greater than the sub-tooth amount of the second cutting tooth.

6. Hole saw (100) according to any one of Claims 1 - 5, **characterized in that** for any one cutting tooth (1124) among the multiple cutting teeth (110), a front angle (α) of the cutting tooth (1124) is in the range of 3° - 10°, and a rear angle (β) of the cutting tooth (1124) is in the range of 30° - 50°.

7. A device for cutting a hole, **characterized in that** the device comprises:
a rotation shaft capable of rotating; and
a hole saw according to any one of Claims 1 - 6, the hole saw being coupled to the rotation shaft, and performing hole-cutting under a rotary driving action of the rotation shaft.

8. The device according to Claim 7, **characterized in that** the device is either an electric tool or a table saw, the electric tool comprising a hand-held electric drill and an impact drill.

## Patentansprüche

1. Lochsäge (100) mit einer Achse (A), wobei die Lochsäge (100) Folgendes umfasst:
einen zylindrischen Körper (120) und
mehrere Schneidzähne (110), die an einem Umfangsrand des Körpers (120) angeordnet sind, wobei die mehreren Schneidzähne (110) Folgendes umfassen: innere Unter-Zähne (1121, 1125), die zu der Achse (A) hin versetzt sind, äußere Unter-Zähne (1122, 1124), die von der Achse (A) weg versetzt sind, und gerade Zähne (1123, 1126), die nicht versetzt sind,
wobei für 80% oder mehr der mehreren Schneidzähne (110) das Verhältnis der Zahntiefe (H) des Schneidzahns zu der Teilung (P) des Schneidzahns und des vorhergehenden Schneidzahns davon im Bereich von 30% - 60% liegt, wobei die mehreren Schneidzähne (110) zwei oder mehr Sätze Schneidzähne (112, 114) umfassen,
**dadurch gekennzeichnet, dass**
jeder Satz Schneidzähne (112) unter den zwei oder mehr Sätzen Schneidzähne (112, 114) in einer Drehschneidrichtung Folgendes umfasst: einen ersten inneren Unter-Zahn (1121) mit einem ersten Unter-Zahnversatz, einen ersten äußeren Unter-Zahn (1122) mit einem zweiten Unter-Zahnversatz, einen ersten geraden Zahn (1123), einen zweiten äußeren Unter-Zahn (1124) mit einem ersten Unter-Zahnversatz, einen zweiten inneren Unter-Zahn (1125) mit einem zweiten Unter-Zahnversatz, und einen zweiten geraden Zahn (1126), wobei der erste Unter-Zahnversatz größer als der zweite Unter-Zahnversatz ist und wobei die Unter-Zahnversätze den radialen Strecken entsprechen, um die inneren Unter-Zähne oder die äußeren Unter-Zähne von vertikalen Positionen davon versetzt sind.

2. Lochsäge (100) nach Anspruch 1, **dadurch gekennzeichnet, dass** jeder der mehreren Schneidzähne (110) eine vordere Schneidfläche hat, wobei die vordere Schneidfläche einen planaren Teil (b) und einen Teil (g) mit gebogener Fläche umfasst, wobei für 80% oder mehr der mehreren Schneidzähne (110) die Länge (S) des planaren Teils (b) kleiner oder gleich 20% der Zahntiefe (H) des Schneidzahns ist und vorzugsweise die Länge (S) des planaren Teils (b) kleiner oder gleich 15% der Zahntiefe (H) des Schneidzahns ist.

3. Lochsäge (100) nach Anspruch 1 oder 2, **dadurch gekennzeichnet, dass** unter den mehreren Schneidzähnen (110) :
Unter-Zahnversätze von zwei beliebigen benachbarten äußeren Unter-Zähnen verschieden sind und die Zahnhöhe des äußeren Unter-Zahns mit dem größeren Unter-Zahnversatz höher als die Zahnhöhe des äußeren Unter-Zahns mit dem kleineren Unter-Zahnversatz ist,
Unter-Zahnversätze von zwei beliebigen benachbarten inneren Unter-Zähnen verschieden sind und die Zahnhöhe des inneren Unter-Zahns mit dem größeren Unter-Zahnversatz höher als die Zahnhöhe des inneren Unter-Zahns mit dem kleineren Unter-Zahnversatz ist.

4. Lochsäge (100) nach Anspruch 1, **dadurch gekennzeichnet, dass** in jedem Satz Schneidzähne:
die Differenz zwischen Unter-Zahnversätzen von zwei beliebigigen Schneidzähnen unter dem ersten inneren Unter-Zahn (1121), dem ersten äußeren Unter-Zahn (1122) und dem ersten geraden Zahn (1123) im Bereich von 0,15 mm - 0,3 mm liegt und
die Differenz zwischen Unter-Zahnversätzen von zwei beliebigen Schneidzähnen unter dem zweiten äußeren Unter-Zahn (1124), dem zweiten inneren Unter-Zahn (1125) und dem zweiten geraden Zahn (1126) im Bereich von 0,15 mm - 0,3 mm liegt.

5. Lochsäge (100) nach einem der Ansprüche 1 - 4, **dadurch gekennzeichnet, dass** unter drei beliebigen benachbarten aufeinanderfolgenden Schneidzähnen unter den mehreren Schneidzähnen (110) eine erste Teilung (P1) zwischen einem ersten Schneidzahn und einem zweiten Schneidzahn vorliegt und eine zweite Teilung (P2) zwischen dem zweiten Schneidzahn und einem dritten Schneidzahn vorliegt, wobei, wenn die erste Teilung (P1) größer als die zweite Teilung (P2) ist, ein Unter-Zahnversatz des ersten Schneidzahns kleiner als der Unter-Zahnversatz des zweiten Schneidzahns ist und wenn die erste Teilung (P1) kleiner als die zweite Teilung (P2) ist, der Unter-Zahnversatz des ersten Schneidzahns größer als der Unter-Zahnversatz des zweiten Schneidzahns ist.

6. Lochsäge (100) nach einem der Ansprüche 1 - 5, **dadurch gekennzeichnet, dass** für einen beliebigen Schneidzahn (1124) unter dem mehreren Schneidzähnen (110) ein vorderer Winkel (α) des Schneidzahns (1124) im Bereich von 3° - 10° liegt und ein hinterer Winkel (β) des Schneidzahns (1124) im Bereich von 30° - 50° liegt.

7. Vorrichtung zum Schneiden eines Lochs, **dadurch gekennzeichnet, dass** die Vorrichtung Folgendes umfasst:
eine Drehwelle, die sich drehen kann, und
eine Lochsäge nach einem der Ansprüche 1 - 6, wobei die Lochsäge an die Drehwelle gekoppelt ist und unter einem Drehantriebsvorgang der Drehwelle Lochschneiden durchführt.

8. Vorrichtung nach Anspruch 7, **dadurch gekennzeichnet, dass** die Vorrichtung ein Elektrowerkzeug oder eine Tischsäge ist, wobei das Elektrowerkzeug einen handgeführten elektrischen Bohrer und einen Schlagbohrer umfasst.

## Revendications

1. Scie-cloche (100), ayant un axe (A), la scie-cloche (100) comprenant :
un corps cylindrique (120) ; et
de multiples dents de coupe (110) disposées au niveau d'un bord circonférentiel du corps (120), les multiples dents de coupe (110) comprenant : des dents secondaires intérieures (1121, 1125) décalées vers l'axe (A), des dents secondaires extérieures (1122, 1124) décalées à l'opposé de l'axe (A), et des dents droites (1123, 1126) qui ne sont pas décalées,
pour 80 % ou plus des multiples dents de coupe (110), le rapport de la profondeur de dent (H) de la dent de coupe au pas (P) de la dent de coupe et de la dent de coupe précédente de celle-ci étant dans la plage de 30 % à 60 %, les multiples dents de coupe (110) comprenant deux ou plusieurs ensembles de dents de coupe (112, 114), **caractérisée en ce que**
chaque ensemble de dents de coupe (112) parmi les deux ou plusieurs ensembles de dents de coupe (112, 114) comprend, dans une direction de coupe rotative : une première dent secondaire intérieure (1121) avec une première quantité de dent secondaire, une première dent secondaire extérieure (1122) avec une seconde quantité de dent secondaire, une première dent droite (1123), une seconde dent secondaire extérieure (1124) avec une première quantité de dent secondaire, une seconde dent secondaire intérieure (1125) avec une seconde quantité de dent secondaire, et une seconde dent droite (1126),
la première quantité de dent secondaire étant supérieure à la seconde quantité de dent secondaire, et les quantités de dent secondaire correspondant aux distances radiales par lesquelles les dents secondaires intérieures ou les dents secondaires extérieures sont décalées par rapport à leurs positions verticales.

2. Scie cloche (100) selon la revendication 1, **caractérisée en ce que** chacune des multiples dents de coupe (110) a une face de coupe avant, la face de coupe avant comprenant une partie plane (b) et une partie à surface arquée (g) ; pour 80 % ou plus des multiples dents de coupe (110), la longueur (S) de la partie plane (b) est inférieure ou égale à 20 % de la profondeur de dent (H) de la dent de coupe, et de préférence, la longueur (S) de la partie plane (b) est inférieure ou égale à 15 % de la profondeur de dent (H) de la dent de coupe.

3. Scie cloche (100) selon la revendication 1 ou 2, **caractérisée en ce que** parmi les multiples dents de coupe (110) :
les quantités de dent secondaire de deux dents secondaires extérieures adjacentes sont différentes, et la hauteur de dent de la dent secondaire extérieure avec la plus grande quantité de dent secondaire est supérieure à la hauteur de dent de la dent secondaire extérieure avec la plus petite quantité de dent secondaire ;
les quantités de dent secondaire de deux quelconques dents secondaires intérieures adjacentes sont différentes, et la hauteur de dent de la dent secondaire intérieure avec la plus grande quantité de dent secondaire est supérieure à la hauteur de dent de la dent secondaire intérieure avec la plus petite quantité de dent secondaire.

4. Scie cloche (100) selon la revendication 1, **caractérisée en ce que** dans chaque ensemble de dents de coupe :
la différence entre les quantités de dent secondaire de deux quelconques dents de coupe parmi la première dent secondaire intérieure (1121), la première dent secondaire extérieure (1122) et la première dent droite (1123) est dans la plage de 0,15 mm à 0,3 mm, et
la différence de quantités de dent secondaire entre deux quelconques dents de coupe parmi la seconde dent secondaire extérieure (1124), la seconde dent secondaire intérieure (1125) et la seconde dent droite (1126) est dans la plage de 0,15 mm à 0,3 mm.

5. Scie cloche (100) selon l'une quelconque des revendications 1 à 4, **caractérisée en ce que** parmi trois quelconques dents de coupe consécutives parmi les multiples dents de coupe (110), il y a un premier pas (P1) entre une première dent de coupe et une seconde dent de coupe, et il y a un second pas (P2) entre la deuxième dent de coupe et une troisième dent de coupe ; lorsque le premier pas (P1) est supérieur au second pas (P2), une quantité de dent secondaire de la première dent de coupe est inférieure à la quantité de dent secondaire de la deuxième dent de coupe, et lorsque le premier pas (P1) est inférieur au second pas (P2), la quantité de dent secondaire de la première dent de coupe est supérieure à la quantité de dent secondaire de la deuxième dent de coupe.

6. Scie cloche (100) selon l'une quelconque des revendications 1 à 5, **caractérisée en ce que** pour une quelconque dent de coupe (1124) parmi les multiples dents de coupe (110), un angle avant (α) de la dent de coupe (1124) est dans la plage de 3° à 10°, et un angle arrière (β) de la dent de coupe (1124) est dans la plage de 30° à 50°.

7. Dispositif pour découper un trou, **caractérisé en ce que** le dispositif comprend :
un arbre de rotation pouvant tourner ; et
une scie-cloche selon l'une quelconque des revendications 1 à 6, la scie-cloche étant accouplée à l'arbre de rotation, et effectuant la découpe de trou sous une action d'entraînement en rotation de l'arbre de rotation.

8. Dispositif selon la revendication 7, **caractérisé en ce que** le dispositif est soit un outil électrique, soit une scie à table, l'outil électrique comprenant une perceuse électrique portative et une perceuse à percussion.
